# EUROPEAN PATENT APPLICATION

(11) **EP 3 882 310 A1**
(43) Date of publication of application: **22.09.2021**
(21) Application number: 19883755.1
(22) Date of filing: 18.10.2019
(51) Int. Cl.: C08L 33/02, C08K 5/10

(54) **ACRYLIC RESIN COMPOSITION, CROSSLINKED PRODUCT AND METHOD FOR PRODUCING CROSSLINKED PRODUCT**

(30) Priority: 15.11.2018 JP 2018214427
(71) Applicant: Nippon Shokubai Co., Ltd., Osaka-shi, Osaka 541-0043 (JP)
(72) Inventor: KANEKO, Tomomasa, Suita-shi, Osaka 564-0034 (JP)
(74) Representative: Hoffmann Eitle
(86) International application number: PCT/JP2019/041185
(87) International publication number: WO 2020/100531

(57) **Abstract**

Disclosed is a resin composition containing an acrylic resin having a carboxy group and a polyfunctional vinyl compound, wherein the acrylic resin contains 0.6 mmol/g or more of the carboxy group, and wherein the polyfunctional vinyl compound contains two or more structural units represented by the following Formula (1) per molecule. 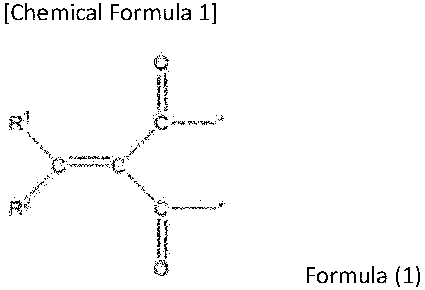 (^{∗} symbols in the formula each independently represent an atom that is bonded with the structural unit represented by Formula (1) and contained in another structural unit included in the polyfunctional vinyl compound but that is not contained in the structural unit represented by Formula (1) and in Formula (1), R¹ and R² each independently are a hydrogen atom or a hydrocarbon group having 1 to 15 carbon atoms.)

## Description

### Technical Field

The present disclosure relates to a composition containing an acrylic resin and a polyfunctional vinyl compound.

### Background Art

A crosslinking system composed of a resin containing an active hydrogen group such as a hydroxyl group or a carboxy group and a cross-linking agent having a functional group reacting with an active hydrogen group has been used in many use applications, such as an adhesive, a pressure-sensitive adhesive, and a coating material. Examples of a crosslinking system that has been used since early times include a combination of polyol-polyvalent isocyanate and a combination of polycarboxylic acid-polyvalent epoxy; however, in recent years, as a system capable of crosslinking under relatively moderate conditions, a combination of polyol and a compound having a plurality of methylene malonate groups in the molecule (polyvalent methylene malonate) has been proposed (Patent Document 1).

### Citation List

### Patent Document

Patent Document 1: International Publication WO 2017/210415

### Summary of Invention

### Technical Problem

As described above, various crosslinking systems have been known, but there is a demand for a crosslinking system in which the degree of freedom of resin design is high and crosslinking is efficiently performed in moderate temperature conditions.

The present invention has been made in view of the current situation described above, and an object thereof is to provide a resin composition whose designed resin characteristics are likely to reflect physical properties required for a crosslinked cured product and which is capable of efficiently crosslinking even under moderate temperature conditions.

### Solution to Problem

The present inventors have conducted intensive studies in order to solve the above-described problems and have conceived a resin composition capable of efficiently crosslinking under moderate conditions.

That is, a resin composition of the present disclosure is a resin composition containing an acrylic resin having a carboxy group and a polyfunctional vinyl compound, wherein the acrylic resin contains 0.6 mmol/g or more of the carboxy group, and wherein the polyfunctional vinyl compound contains two or more structural units represented by the following Formula (1) per molecule. 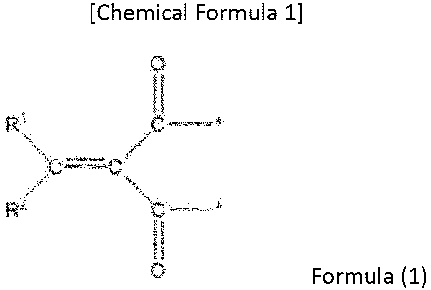 (* symbols in the formula each independently represent an atom that is bonded with the structural unit represented by Formula (1) and contained in another structural unit included in the polyfunctional vinyl compound but that is not contained in the structural unit represented by Formula (1). In Formula (1), R¹ and R² each independently are a hydrogen atom or a hydrocarbon group having 1 to 15 carbon atoms.)

### Advantageous Effects of Invention

A resin composition of the present disclosure can be efficiently crosslinked even under moderate conditions. Thus, for example, the resin composition can be suitably used for various use applications requiring efficient crosslinking under moderate conditions, or the like.

### Description of Embodiments

Hereinafter, the present invention will be described. Incidentally, combinations of two or more of respective preferred embodiments of the present invention described below are also preferred embodiments of the present invention.

### <Polyfunctional vinyl compound>

A polyfunctional vinyl compound that is an essential component of a resin composition of the present disclosure (hereinafter, referred to as "polyfunctional vinyl compound of the present disclosure") contains two or more structural units represented by the following Formula (1) per molecule of the polyfunctional vinyl compound of the present disclosure. The upper limit of the structural unit represented by the following Formula (1) contained per molecule of the polyfunctional vinyl compound of the present disclosure is not particularly limited, and is preferably 20 or less and more preferably 10 or less. 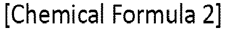 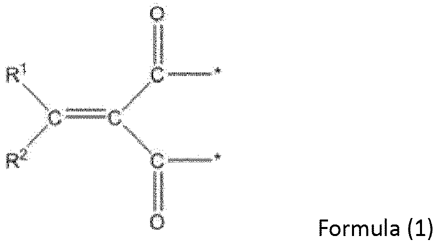 * symbols in the formula each independently represent an atom that is bonded with the structural unit represented by Formula (1) and contained in another structural unit included in the polyfunctional vinyl compound but that is not contained in the structural unit represented by Formula (1).

The atoms represented by the above ^{∗} are not particularly limited, and each independently are preferably an atom selected from a carbon atom, a nitrogen atom, and an oxygen atom and more preferably an oxygen atom.

In Formula (1), R¹ and R² each independently are a hydrogen atom or a hydrocarbon group having 1 to 15 carbon atoms, preferably, any one thereof is a hydrogen atom, and further preferably, both thereof are a hydrogen atom.

The number of carbon atoms of the hydrocarbon group for R¹ and R² is preferably 1 to 10 and more preferably 1 to 5. Specific examples of R¹ and R² include a methyl group, an ethyl group, a n-butyl group, a n-pentyl group (amyl group), a n-hexyl group, a n-heptyl group, a n-octyl group, a n-nonyl group, a n-decyl group, a n-undecyl group, a n-dodecyl group, a n-tridecyl group, a n-tetradecyl group, a n-pentadecyl group, an isopropyl group, a 2-methyl butyl group, an isoamyl group, a 3,3-dimethyl butyl group, a 2-ethyl butyl group, a 2-ethyl-2-methyl propyl group, an isoheptyl group, an isooctyl group, a 2-ethyl hexyl group, a 2-propylpentyl group, a neononyl group, a 2-ethylheptyl group, a 2-propylhexyl group, a 2-butylpentyl group, an isodecyl group, a neodecyl group, a 2-ethyloctyl group, a 2-propylheptyl group, a 2-butylhexyl group, an isoundecyl group, a neoundecyl group, a 2-ethylnonyl group, a 2-propyloctyl group, a 2-butylheptyl group, a 2-pentylhexyl group, an isododecyl group, a neododecyl group, a 2-ethyldecyl group, a 2-propylnonyl group, a 2-butyloctyl group, a 2-pentylheptyl group, an isotridecyl group, a neotridecyl group, a 2-ethylundecyl group, a 2-propyldecyl group, a 2-butyloctyl group, a 2-pentyloctyl group, a 2-hexylheptyl group, an isotetradecyl group, a neotetradecyl group, a 2-ethyldodecyl group, a 2-propylundecyl group, a 2-butyldecyl group, a 2-pentylnonyl group, a 2-hexyloctyl group, an isopentadecyl group, a neopentadecyl group, a cyclohexylmethyl group, and a benzyl group.

The structural unit represented by Formula (1) is bonded to other structural units contained in the polyfunctional vinyl compound via a linking group, respectively. That is, the structural unit represented by Formula (1) is generally bonded to one or two linking groups and is bonded to at least one linking group.

As other structural units contained in the polyfunctional vinyl compound to which the structural unit represented by Formula (1) is bonded, a group selected from an alkoxy group, an alkyl group, an aryl group, and a linking group is preferred, and these groups may have a substituent.

The linking group is generally a group having a structure of indirectly bonding two or more structural units represented by Formula (1). As the linking group, an alkyl group, an alkoxy group, an alkenyl group, an aryl group, a heterocyclic group, and the like, and groups in which two or more of those groups are bonded and/or groups bonded to the structural unit represented by Formula (1) (provided that, the structural unit represented by Formula (1) is not contained in the linking group) by an ether bond, an ester bond, an amide bond, a single bond, or the like are exemplified. The linking group may have one or two or more substituents. Examples of the substituent include an alkyl group, an aryl group, a heterocyclic group, an alkoxy group, an amide group, an acyl group, and a halogen atom, and these may further have a substituent. Further specific examples of the linking group include a residue of polyol such as diol and a residue of polyester. Here, the residue refers to a remaining group provided by removing at least one atom from a chemical species such as original molecules. The molecular weight of the linking group is not particularly limited, and it is preferable to set the molecular weight of the linking group so that the entire polyfunctional vinyl compound falls within the following molecular weight range.

The content of the structural unit represented by Formula (1) contained in the polyfunctional vinyl compound of the present disclosure is preferably 1.0 mmol/g or more, more preferably 1.5 mmol/g or more, further preferably 2.0 mmol/g or more, and even more preferably 2.5 mmol/g or more, from the viewpoint of improving crosslinking efficiency. Furthermore, the content thereof is preferably 6.0 mmol/g or less, more preferably 5.6 mmol/g or less, and further preferably 5.2 mmol/g or less, from the viewpoint of improving compatibility with the acrylic resin of the present disclosure described below.

The weight average molecular weight (hereinafter, also referred to as Mw) of the polyfunctional vinyl compound of the present disclosure is not particularly limited, and is preferably 300 or more and 10000 or less, more preferably 300 or more and 5000 or less, and even more preferably 400 or more and 3000 or less.

The weight average molecular weight of the polyfunctional vinyl compound in the present disclosure is generally a value obtained by using Model No.: HLC-8220GPC manufactured by Tosoh Corporation as a gel permeation chromatographic (GPC) measurement apparatus, and separation column: Model No.: TSKgel Super Multipore HZ-N manufactured by Tosoh Corporation and converted based on standard polystyrene [manufactured by Tosoh Corporation]. A polyfunctional vinyl compound that is not appropriate to be measured under the above-described conditions may be measured by appropriately changing the above-described conditions at the minimum.

Examples of the polyfunctional vinyl compound of the present disclosure include compounds described in International Publication WO 2017/210415, Japanese Unexamined Patent Publication No. 2015-517973, Japanese Unexamined Patent Publication No. 2018-502852, or International Publication WO 2018/031101. Furthermore, the polyfunctional vinyl compound of the present disclosure is not particularly limited as long as it is the polyfunctional vinyl compound described in the present specification, and is preferably polyvalent methylene malonate in which two or more structural units represented in Formula (1) described in the present specification are linked by an ester bond, more preferably polyvalent methylene malonate obtained from the above-described dialkyl methylene malonate and a polyhydric alcohol having a molecular weight of 400 or less, and particularly preferably polyvalent methylene malonate obtained by transesterification of dialkyl methylene malonate and dihydric alcohol having a molecular weight of 400 or less since there is a tendency that crosslinking can be efficiently performed under moderate conditions.

Specific examples of the dialkyl methylene malonate include methyl propyl methylene malonate, dihexyl methylene malonate, dicyclohexyl methylene malonate, diisopropyl methylene malonate, butyl methyl methylene malonate, ethoxyethyl ethyl methylene malonate, methoxyethyl methyl methylene malonate, hexyl ethyl methylene malonate, dipentyl methylene malonate, ethyl pentyl methylene malonate, methyl pentyl methylene malonate, ethyl ethylmethoxyl methylene malonate, ethoxyethyl methyl methylene malonate, butyl ethyl methylene malonate, dibutyl methylene malonate, diethyl methylene malonate (DEMM), diethoxy ethyl methylene malonate, dimethyl methylene malonate, di-N-propyl methylene malonate, ethyl hexyl methylene malonate, fenchyl methyl methylene malonate, menthyl methyl methylene malonate, 2-phenylpropyl ethyl methylene malonate, 3-phenylpropyl methylene malonate, and dimethoxy ethyl methylene malonate.

Examples of the polyhydric alcohol include a dihydric alcohol and a trihydric or higher alcohol. The upper limit of the valence of the polyhydric alcohol is not particularly limited. The polyhydric alcohol may be used in combination of plural kinds thereof. As the dihydric alcohol, alkylene glycol having 2 to 20 carbon atoms is exemplified, specifically,
a compound represented by general formula; HO-CₘH₂ₘ₊₁-OH (m is an integer of 2 to 15 and is preferably 2 to 10 and preferably 2 to 6) is exemplified, and specific examples thereof include ethylene glycol, 1,3-propylene glycol, 1,4-butylene glycol, 1,5-pentylene glycol, and 1,6-hexylene glycol.

Furthermore, the dihydric alcohol may be
polyalkylene glycol represented by general formula; HO-(CᵣH₂ᵣ₊₁-O)ₛ-H (r is an integer of 2 to 5 and is preferably 2 to 3, and s is an integer of 2 to 100 and is preferably 10 to 80 and more preferably 20 to 50).

Examples of the trihydric or higher alcohol include compounds such as glycerin, polyglycerin, erythritol, xylitol, sorbitol, trimethylol propane, pentaerythritol, and dipentaerythritol.

### <Acrylic resin>

The acrylic resin having a carboxy group that is an essential component of the resin composition of the present disclosure (hereinafter, referred to as the "acrylic resin of the present disclosure") is preferably a copolymer or homopolymer containing 5 mass% or more of a structural unit derived from one or more (meth)acrylic monomers selected from (meth)acrylic acid, a salt of (meth)acrylic acid, (meth)acrylic acid ester, and (meth)acrylamide (hereinafter, also referred to as the "(meth)acrylic structural unit") with respect to the total of the (meth)acrylic structural unit and other monomer structural units described below. The (meth)acrylic acid means methacrylic acid and/or acrylic acid. The structural unit derived from the (meth)acrylic monomer refers to a structural unit having the same structure as a structure formed by radical polymerization of the (meth)acrylic monomer, and structural units formed by method other than the method of actually radically polymerizing the (meth)acrylic monomer are also included as long as they have the same structure. For example, a structural unit derived from acrylic acid, CH₂=CH(COOH), can be represented by -CH₂-CH(COOH)-. Since the acrylic resin of the present disclosure has a high degree of freedom of resin design, the resin composition of the present disclosure can be applied to various use applications.

The acrylic resin of the present disclosure contains 0.6 mmol/g or more of the carboxy group. Incidentally, in the present disclosure, the carboxy group includes a salt of the carboxy group. The salt of the carboxy group also contributes to crosslinking. The salt of the carboxy group may be contained depending on request such as pot life. The salt is not limited, and for example, an ammonium salt, an organic amine salt, a metallic salt, and the like are exemplified, and an alkali metal salt or an organic amine salt is preferred. The carboxy group may be bonded to any site of a polymer chain by a covalent bond, and for example, may be bonded to a main chain or a graft chain. Furthermore, the carboxy group may be bonded to the center of a polymer chain or may be bonded to a terminal. The content of the carboxy group is necessary to be 0.6 mmol/g or more from the viewpoint of improving crosslinking efficiency, and is preferably 0.8 mmol/g or more, more preferably 1.0 mmol/g or more, and further preferably 1.2 mmol/g or more.

The carboxy group contained in the acrylic resin of the present disclosure may be partially or entirely neutralized, and the neutralization degree thereof may be selected to satisfy curing conditions required depending on use application. For example, in the case of focusing on securing of usable time, the neutralization degree of the carboxy group contained in the acrylic resin of the present disclosure is preferably 50 mol% or less, more preferably 20 mol% or less, and even more preferably 10 mol% or less. Furthermore, for example, in the case of focusing on swiftness of curing, the neutralization degree is preferably 50 mol% or more, more preferably 80 mol% or more, and even more preferably 90 mol% or more. Furthermore, the upper limit of the content of the carboxy group is preferably 6.0 mmol/g or less, more preferably 5.0 mmol/g or less, and further preferably 3.5 mmol/g or less, from the viewpoint of securing satisfactory compatibility with the polyfunctional vinyl compound of the present disclosure.

From the viewpoint that those having various compositions and molecular weights can be easily obtained by a radical polymerization method, the acrylic resin of the present disclosure contains more preferably 10 mass% or more and 100 mass% or less, further preferably 20 mass% or more and 100 mass% or less, even more preferably 30 mass% or more and 100 mass% or less, and particularly preferably 40 mass% or more and 100 mass% or less of the (meth)acrylic structural unit.

The (meth)acrylic monomer is not particularly limited and may be appropriately selected depending on use application of the crosslinkable resin composition of the present disclosure; however, specific examples thereof include (meth)acrylic acids or salts thereof such as (meth)acrylic acid, sodium (meth)acrylate, and potassium (meth)acrylate; (meth)acrylic esters such as methyl (meth)acrylate, ethyl (meth)acrylate, n-butyl (meth)acrylate, s-butyl (meth)acrylate, t-butyl (meth)acrylate, 2-ethylhexyl (meth)acrylate, cyclohexyl (meth)acrylate, lauryl (meth)acrylate, stearyl (meth)acrylate, benzyl (meth)acrylate, isobornyl (meth)acrylate, 2-hydroxyethyl (meth)acrylate, 2-hydroxypropyl (meth)acrylate, 2-methoxyethyl (meth)acrylate, 2-ethoxyethyl (meth)acrylate, phenoxyethyl (meth)acrylate, tetrahydrofurfuryl (meth)acrylate, and glycidyl (meth)acrylate; and (meth)acrylamides such as N,N-dimethyl (meth)acrylamide and (meth)acryloyl morpholine, and these may be used singly or in combination of two or more kinds thereof.

The acrylic resin of the present disclosure may contain structural units derived from monomers other than the (meth)acrylic monomer (hereinafter, also referred to "other monomers") (hereinafter, also referred to as "other monomer structural units"). Examples of the other monomers include unsaturated carboxylic acids such as crotonic acid, cinnamic acid, vinylbenzoic acid, maleic acid, fumaric acid, and itaconic acid; unsaturated acid anhydrides such as maleic anhydride and itaconic anhydride; aromatic vinyls such as styrene and vinyl toluene; N-substituted maleimides such as cyclohexylmaleimide, phenylmaleimide, and benzylmaleimide; vinyl esters such as vinyl acetate, vinyl propionate, and vinyl benzoate; vinyl ethers such as n-butyl vinyl ether, 2-ethylhexyl vinyl ether, and cyclohexyl vinyl ether; N-vinylamides such as N-vinyl pyrrolidone and N-vinylcaprolactam; conjugated dienes such as 1,3-butadiene, isoprene, and chloroprene; and α-olefins such as ethylene, propylene, and 1-butene. These may be used singly or in combination of two or more kinds thereof. Other monomers may be appropriately used depending on use application of the crosslinkable resin composition of the present disclosure.

The content of the other monomer structural units in the acrylic resin of the present disclosure is preferably 0 mass% or more and 95 mass% or less, more preferably 0 mass% or more and 90 mass% or less, further preferably 0 mass% or more and 80 mass% or less, even more preferably 0 mass% or more and 70 mass% or less, and particularly preferably 0 mass% or more and 60 mass% or less with respect to the total of the (meth)acrylic structural unit and the other monomer structural units.

When the (meth)acrylic monomer of the present disclosure is polymerized, a chain transfer agent may be used, and the molecular weight of the polymer can be adjusted by adjusting the amount of the chain transfer agent. Examples of the chain transfer agent include thiol compounds such as 2-mercaptoethanol, thioglycerol, thioglycollic acid, 2-mercaptopropionic acid, 3-mercaptopropionic acid, thiomalic acid, octyl thioglycolate, octyl 3-mercaptopropionate, 2-mercaptoethane sulfonic acid, n-dodecylmercaptan, octylmercaptan, and butyl thioglycolate; halides such as carbon tetrachloride, methylene chloride, bromoform, and bromotrichloroethane; secondary alcohols such as isopropanol; phosphorus acid and salts thereof, hypophosphorous acid and salts thereof, sulfurous acid and salts thereof, bisulfite and salts thereof, dithionite and salts thereof, and metabisulfite and salts thereof.

Furthermore, when the (meth)acrylic monomer is polymerized, a solvent may be used, and examples thereof include aliphatic hydrocarbon compounds such as n-hexane and n-heptane; aromatic compounds such as benzene, toluene, and xylene; alcohols such as isopropyl alcohol and n-butyl alcohol; ethers such as propylene glycol methyl ether, dipropylene glycol methyl ether, ethyl cellosolve, and butyl cellosolve; esters such as ethyl acetate, butyl acetate, and cellosolve acetate; ketones such as acetone, methyl ethyl ketone, methyl isobutyl ketone, and diacetone alcohol; and organic solvents such as amide including dimethylformamide or the like; however, the present disclosure is not limited only to such examples. These solvents may be used singly or in combination of two or more kinds thereof.

The molecular weight of the acrylic resin of the present disclosure may be appropriately adjusted depending on use application of the crosslinkable resin composition of the present invention, and is preferably 500 or more, more preferably 1000 or more, and further preferably 2000 or more, from the viewpoint of crosslinking efficiency. Furthermore, from the viewpoints of workability and compatibility with the polyfunctional vinyl compound, the molecular weight is preferably 1000000 or less, more preferably 500000 or less, and further preferably 300000 or less. The molecular weight in the present disclosure is generally a value obtained by using Model No.: HLC-8220GPC manufactured by Tosoh Corporation as a gel permeation chromatographic (GPC) measurement apparatus, and separation column: Model No.: TSKgel Super HZM-M manufactured by Tosoh Corporation and converted based on standard polystyrene [manufactured by Tosoh Corporation]. An acrylic resin that is not appropriate to be measured under the above-described conditions may be measured by appropriately changing the above-described conditions at the minimum.

### <Resin composition>

The resin composition of the present disclosure contains the acrylic resin of the present disclosure and the polyfunctional vinyl compound of the present disclosure, and thereby characteristics of the acrylic resin of the present disclosure can reflect physical properties of a crosslinked cured product. The acrylic resin of the present disclosure is designed to enable physical properties of a crosslinked cured product to be enhanced, and thereby satisfactory crosslinking efficiency is exhibited. From this viewpoint, the mass ratio of the acrylic resin of the present disclosure to one part of the polyfunctional vinyl compound of the present disclosure is preferably 0.5 or more and 100 or less, more preferably 1 or more and 10 or less, and even more preferably 1 or more and 5 or less. With the above-described range, there is a tendency that designed resin characteristics are likely to reflect physical properties required for a crosslinked cured product.

From the viewpoint of improving storage stability, the resin composition of the present disclosure may contain one or two or more agents selected from an anion polymerization inhibitor, a radical polymerization inhibitor, and an antioxidant. As the anion polymerization inhibitor, an acid having an acid dissociation constant in water of 2 or less is preferred, and specific examples thereof include sulfonic acids such as sulfuric acid, methanesulfonic acid, and p-toluenesulfonic acid, sulfurous acid, phosphoric acid, and trifluoroacetic acid. In the case of containing an anion polymerization inhibitor, the content thereof may be appropriately adjusted depending on the degree of acidity, but from the viewpoint of achieving the balance between storage stability and reactivity, the content thereof is preferably 0.1 to 2000 ppm by mass, more preferably 1 to 1000 ppm by mass, and further preferably 3 to 500 ppm by mass, with respect to the polyfunctional vinyl compound. As the radical polymerization inhibitor or the antioxidant, from the viewpoint of coloration suppression, hindered phenols, sulfur-based antioxidants, and phosphorus-based antioxidants are preferred, and specific examples thereof include hindered phenols such as 2,6-di-t-butyl-4-methyl phenol, 3-(3,5-di-t-butyl-4-hydroxyphenyl)propionic acid stearate, 2,2'-methylenebis(4-methyl-6-t-butylphenol), tetrakis(methylene-3-(3,5-di-t-butyl-4-hydroxyphenyl)propionate)methane, 4,4'-thiobis(3-methyl-6-t-butylphenol), and 2,5-di-t-butylhydroquinone; sulfur-based antioxidants such as dilauryl thiodipropionate and distearyl thiodipropionate; and phosphorus-based antioxidants such as triphenyl phosphite, tris(nonylphenyl)phosphite, distearyl pentaerythritol diphosphite, and tetra(tridecyl)-1,1,3-tris(2-methyl-5-t-butyl-4-hydroxyphenyl)butane diphosphite. In the case of containing a radical polymerization inhibitor or an antioxidant, from the viewpoint of achieving the balance between storage stability and reactivity, the content thereof is preferably 50 to 5000 ppm by mass, more preferably 100 to 3000 ppm by mass, and further preferably 200 to 2000 ppm by mass, with respect to the polyfunctional vinyl compound.

From the viewpoints of avoiding an excessive increase in viscosity and securing ease of handleability to improve workability, the resin composition of the present disclosure may contain a non-reactive or reactive diluent. Here, the reactive diluent indicates a diluent having a functional group capable of being copolymerized with the polyfunctional vinyl compound of the present disclosure by an anion polymerization mechanism. When only such a reactive diluent is used as a diluent, the reactive diluent is incorporated in crosslinking while undergoing high-molecular-weight polymerization, and thus a crosslinkable resin composition not requiring a step of removing a volatile solvent can be constructed. On the other hand, the non-reactive diluent indicates a diluent not having a functional group to be copolymerized with the polyfunctional vinyl compound of the present disclosure by an anion polymerization mechanism.

As the non-reactive diluent, water or an organic solvent is exemplified, and may be appropriately selected depending on use application; however, since there is a tendency that a hydroxyl group of water is relatively easy to cause chain transfer to inhibit the crosslinking of the crosslinkable resin composition of the present invention, an organic solvent is preferred. As the organic solvent, an organic solvent having volatility and capable of uniformly dissolving the acrylic resin of the present disclosure and the polyfunctional vinyl compound of the present disclosure is preferred. Specific examples thereof include esters such as ethyl acetate, butyl acetate, ethyl propionate, butyl propionate, methyl lactate, ethyl lactate, ethylene glycol monomethyl ether acetate, and propylene glycol monomethyl ether acetate; ketones such as acetone, methyl ethyl ketone, methyl isobutyl ketone, and cyclohexanone; ethers such as ethylene glycol dimethyl ether, ethylene glycol diethyl ether, diethylene glycol dimethyl ether, diethylene glycol diethyl ether, propylene glycol dimethyl ether, propylene glycol diethyl ether, tetrahydrofuran, and dioxane; amides such as dimethylformamide, dimethyl acetamide, and N-methylpyrrolidone; alcohols such as methanol, ethanol, isopropanol, n-butanol, s-butanol, ethylene glycol, propylene glycol, ethylene glycol monomethyl ether, ethylene glycol monoethyl ether, diethylene glycol monomethyl ether, diethylene glycol monoethyl ether, propylene glycol monomethyl ether, propylene glycol monoethyl ether, and 3-methoxybutanol; and aromatic hydrocarbons such as benzene, toluene, xylene, and ethylbenzene. These may be used singly or in combination of two or more kinds thereof.

As the reactive diluent, a monofunctional 1,1-disubstituted vinyl compound, that is, a vinyl compound having only one structure represented by Formula (I) in the molecule can be exemplified. Specific examples of such a compound include dimethyl methylene malonate, diethyl methylene malonate, di-n-butyl methylene malonate, di-n-hexyl methylene malonate, dicyclohexyl methylene malonate, methylcyclohexyl methylene malonate, and 2-ethyl hexyl methyl methylene malonate. These may be used singly or in combination of two or more kinds thereof.

The resin composition of the present disclosure may contain, for example, 0 mass% or more and 50 mass% or less of the non-reactive diluent, and may contain, for example, 0 mass% or more and 50 mass% or less of the reactive diluent.

From the viewpoint of improving crosslinking efficiency, the amount of water contained in the resin composition of the present disclosure is set such that the content of water is preferably 2 parts by mass or less, more preferably 1 part by mass or less, and preferably 0.5 parts by mass or less, with respect to the content of 1 part by mass of the polyfunctional vinyl compound of the present disclosure. The preferred lower limit of the amount of water contained in the resin composition of the present disclosure is 0 parts by mass or more.

From the viewpoint of handleability such as lowering of a viscosity, the amount of the organic solvent contained in the resin composition of the present disclosure is set such that the content of the organic solvent is preferably 0.1 parts by mass or more, more preferably 0.3 parts by mass or more, and preferably 0.5 parts by mass or more, with respect to the content of 1 part by mass of the acrylic resin of the present disclosure. From the viewpoint of improving crosslinking efficiency, the preferred upper limit of the amount of the organic solvent contained in the resin composition of the present disclosure is preferably 50 parts by mass or less, and more preferably 10 mass% or less, with respect to the content of 1 part by mass of the acrylic resin of the present disclosure.

The resin composition of the present disclosure may contain, as necessary, a resin other than the acrylic resin of the present disclosure or a polyfunctional carboxylic acid, a polyfunctional vinyl compound other than the polyfunctional vinyl compound of the present disclosure, and the like. Examples of the resin other than the acrylic resin of the present disclosure include polycarboxylic acid composed of a polymer chain other than acrylic type and polycarboxylic acid having a carboxy group content of less than 0.6 mmol/g, and examples of the polycarboxylic acid other than the acrylic resin of the present disclosure include a low-molecular compound having two or more carboxy groups in the molecule.

Specific examples of the polycarboxylic acid composed of a polymer chain other than acrylic type include polycarboxylic acid composed of a polyester chain, polycarboxylic acid composed of a polyether chain, polycarboxylic acid composed of a polyurethane chain, polycarboxylic acid composed of a polysiloxane chain, and polycarboxylic acid composed of a polyamide chain. Specific examples of the low-molecular compound having two or more carboxy groups in the molecule include oxalic acid, succinic acid, maleic acid, phthalic acid, 1,2,3-propanetricarboxylic acid, 1,3,5-benzenetricarboxylic acid, 1,2,3,4-butanetetracarboxylic acid, and pyromellitic acid.

The resin composition of the present disclosure may contain components other than the components described above, such as a light stabilizer, an ultraviolet absorber, an ultraviolet stabilizer, an infrared absorber, a crosslinking promoter, a pigment, a dye, a dispersant, a release agent, a matting agent, a defoamer, a leveling agent, an antistatic agent, a filler, a flame retardant, a tackifier, wax, a conductive agent, a plasticizer, a modifier, and a thixotropic imparting agent, depending on use application.

The resin composition of the present disclosure may be distributed while being divided into two components of a composition containing the acrylic resin of the present disclosure and a composition containing the polyfunctional vinyl compound of the present disclosure.

Preferred embodiments of the resin composition of the present disclosure are as follows.
(I) A resin composition containing an acrylic resin having a carboxy group and a polyfunctional vinyl compound, in which the acrylic resin contains 0.6 mmol/g or more of the carboxy group, and the polyfunctional vinyl compound contains two or more structural units represented by the above Formula (1) per molecule.
(II) The resin composition described in (I), in which the polyfunctional vinyl compound contains 1.0 mmol/g or more, preferably 1.5 mmol/g or more, more preferably 2.0 mmol/g or more, and further preferably 2.5 mmol/g or more of the structural unit represented by Formula (1).
(III) The resin composition described in (I) or (II), in which the structural unit represented by Formula (1) contained in the polyfunctional vinyl compound is contained in 6.0 mmol/g or less, preferably 5.6 mmol/g or less, and further preferably 5.2 mmol/g or less.
(IV) The resin composition described in any one of (I) to (III), in which atoms represented by ^{∗} in the above Formula (1) are an atom selected from a carbon atom, a nitrogen atom, and an oxygen atom and preferably an oxygen atom.
(V) The resin composition described in any one of (I) to (IV), in which the polyfunctional vinyl compound further contains a group selected from an alkoxy group, an alkyl group, an aryl group, and a linking group (these groups may have a substituent) as other structural units contained in the polyfunctional vinyl compound to which the structural unit represented by Formula (1) is bonded.
(VI) The resin composition described in any one of (I) to (V), in which the acrylic resin contains 0.8 mmol/g or more, preferably 1.0 mmol/g or more, and more preferably 1.2 mmol/g or more of the carboxy group.
(VII) The resin composition described in any one of (I) to (VI), in which the carboxy group contained in the acrylic resin is contained in 6.0 mmol/g or less, preferably 5.0 mmol/g or less, and more preferably 3.5 mmol/g or less.
(VIII) The resin composition described in any one of (I) to (VII), in which the acrylic resin contains 5 mass% or more, preferably 10 mass% or more and 100 mass% or less, more preferably 20 mass% or more and 100 mass% or less, further preferably 30 mass% or more and 100 mass% or less, and even more preferably 40 mass% or more and 100 mass% or less of the (meth)acrylic structural unit.
(IX) The resin composition described in any one of (I) to (VIII), in which a mass ratio of the acrylic resin to the polyfunctional vinyl compound is preferably 0.5 or more and 100 or less, more preferably 1 or more and 10 or less, and even more preferably 1 or more and 5 or less, with respect to one part of the polyfunctional vinyl compound.
(X) The resin composition described in any one of (I) to (IX), in which a weight average molecular weight of the polyfunctional vinyl compound is 300 or more and preferably 400 or more.
(XI) The resin composition described in any one of (I) to (X), in which a weight average molecular weight of the polyfunctional vinyl compound is 10000 or less, preferably 5000 or less, and more preferably 3000 or less.
(XII) The resin composition described in (I) to (XI), in which the amount of water contained in the resin composition is 2 parts by mass or less, preferably 1 part by mass or less, and more preferably 0.5 parts by mass or less, with respect to the content of 1 part by mass of the polyfunctional vinyl compound of the present disclosure.
(XIII) The resin composition described in (I) to (XII), in which a content of the organic solvent contained in the resin composition is 0.1 parts by mass or more, preferably 0.3 parts by mass or more, and more preferably 0.5 parts by mass or more, with respect to the content of 1 part by mass of the acrylic resin of the present disclosure.
(XIV) The resin composition described in (I) to (XIII), in which a content of the organic solvent contained in the resin composition is 50 parts by mass or less and preferably 10 parts by mass or less, with respect to the content of 1 part by mass of the acrylic resin of the present disclosure.

Incidentally, in a case where there is description of a carboxy group in the above (I) to (XIV), a salt of the carboxy group may be included.

### <Crosslinked product>

A crosslinked product of the present disclosure is a crosslinked product obtained by bringing the acrylic resin of the present disclosure, the polyfunctional vinyl compound of the present disclosure, and a base into contact with one another. Preferably, the crosslinked product of the present disclosure is a crosslinked product obtained by bringing the resin composition of the present disclosure and a base into contact with each other. A preferred base is as described below.

### <Method for producing crosslinked product>

A method for producing a crosslinked product of the present disclosure includes a step of bringing the acrylic resin of the present disclosure, the polyfunctional vinyl compound of the present disclosure, and a base into contact with one another. It is preferable that the polyfunctional vinyl compound of the present disclosure and a base are brought into contact with each other in the presence of the acrylic resin of the present disclosure, and a method of bringing the acrylic resin of the present disclosure and the polyfunctional vinyl compound of the present disclosure into contact with each other and then bringing them into contact with a base, a method of bringing the acrylic resin of the present disclosure and a base into contact with each other and then bringing them into contact with the polyfunctional vinyl compound of the present disclosure, and the like are exemplified. The step of bringing the components into contact with one another may be performed in the presence of other components as necessary, and for example, arbitrary components of the resin composition of the present disclosure, and the like are exemplified. Preferred use ratios of the acrylic resin of the present disclosure and the polyfunctional vinyl compound of the present disclosure are the same as the content ratio of the acrylic resin of the present disclosure and the polyfunctional vinyl compound of the present disclosure in the resin composition of the present disclosure. Preferred temperature conditions of the step of bringing the components into contact with one another are the same as those of the step of bringing the resin composition of the present disclosure into contact with a base. The base to be used in the step of bringing the components into contact with one another and the use ratio thereof are preferably the same as those of the step of bringing the resin composition of the present disclosure into contact with a base.

When the polyfunctional vinyl compound of the present disclosure and a base are brought into contact with each other in the presence of the acrylic resin of the present disclosure, the abundance of water is set to preferably 2 parts by mass or less, more preferably 1 part by mass or less, and preferably 0.5 parts by mass or less, with respect to the content of 1 part by mass of the polyfunctional vinyl compound of the present disclosure. The abundance of water at the time of contact described above may be 0 parts by mass or more.

The method for producing a crosslinked product of the present disclosure preferably includes a step of bringing the resin composition of the present disclosure into contact with a base (hereinafter, also referred to as a "contact step"). In the contact step, as the method of bringing the resin composition of the present disclosure into contact with a base, for example, adding a base to the resin composition of the present disclosure and mixing, applying the resin composition of the present disclosure onto a base material containing a base on a surface, applying the resin composition of the present disclosure onto a base material and then applying a base thereonto, and the like are exemplified, but the method is not limited thereto.

In a case where a base is added to the resin composition of the present disclosure and mixed, the addition amount thereof may be appropriately selected depending on the type of base, the structure of the acrylic resin of the present disclosure, and the like. Furthermore, a base to be added is a low-molecular compound reacting with a carboxy group to form a carboxylic salt, which is preferable from the viewpoint of efficiency of a crosslinking system. Such an embodiment of adding and mixing a base can also be called an embodiment of preparing a mixture of the acrylic resin of the present disclosure and the polyfunctional vinyl compound of the present disclosure.

The base which can be used in the method for producing a crosslinked product of the present disclosure is not particularly limited as long as it acts as a base, various compounds including alkali metals, basic low-molecular compounds to basic high-molecular compounds, and solid-state materials having a basic surface can be applied. As the basic low-molecular compounds, from the viewpoints of availability and handleability, a metallic oxide, a hydroxide salt, an alkoxide compound, a carboxylic salt, amines, and the like are preferably exemplified.

As the metallic oxide, a basic metallic oxide is exemplified, and examples thereof include sodium oxide (Na₂O), potassium oxide (K₂O), magnesium oxide (MgO), calcium oxide (CaO), copper oxide (CuO), and zinc oxide (ZnO).

Examples of the hydroxide salt include metallic hydroxides such as sodium hydroxide, potassium hydroxide, magnesium hydroxide, calcium hydroxide, copper hydroxide, and zinc hydroxide; and ammonium hydroxides such as tetramethylammonium hydroxide, tetraethylammonium hydroxide, and tetrabutylammonium hydroxide.

As the alkoxide compound, a compound represented by formula (R⁵O)ₘ₁M is exemplified (in the formula, R⁵ is an alkyl group or aryl group which may have a substituent, more specifically may be an alkyl group or aryl group having 1 to 10 carbon atoms, M represents a m1-valent cation, and m1 is an integer of 1 to 4), and examples thereof include metallic alkoxides such as sodium methoxide, sodium ethoxide, aluminum isopropoxide, and titanium tetraisopropoxide.

As the carboxylic salt, a salt of monocarboxylic acid or dicarboxylic acid is exemplified, and may be any one of salts of aliphatic carboxylic acid and aromatic carboxylic acid. The number of carbon atoms of the carboxylic acid may be 1 to 10 and may be 1 to 6. More specific examples of the carboxylic salt include carboxylic salts such as sodium formate, sodium acetate, zinc acetate, sodium benzoate, sodium oxalate, ammonium acetate, and salts composed of acetic acid and triethylamine.

Amines can be represented as R¹R²R³N (R¹, R², and R³ each independently are hydrogen, an alkyl group which may have a substituent, or an aryl group which may have a substituent, and may be bonded to one another to form a cyclic structure), and specific examples thereof include ammonia, butylamine, dibutylamine, triethylamine, piperidine, 1-methylpiperidine, morpholine, 4-methylmorpholine, pyridine, imidazole, 1-methylimidazole, and tetramethylguanidine.

As the basic high-molecular compounds, high-molecular compounds having a structure, which is equal to that of the basic low-molecular compound, can be exemplified, and specific examples thereof include a sodium salt of a (meth)acrylic acid copolymer, a amine salt of a (meth)acrylic acid copolymer, polymer having a carboxylic salt other than a (meth)acrylic acid copolymer, a vinylpyridine copolymer, and polyethylenimine.

These basic compounds may be capsulated with any materials and released by external stimulus.

The use amount of the base to be used may be selected to satisfy curing conditions required depending on use application. For example, in the case of focusing on securing of usable time, the neutralization degree of the carboxy group contained in the acrylic resin of the present disclosure is preferably 50 mol% or less, more preferably 20 mol% or less, and even more preferably 10 mol% or less. Furthermore, for example, in the case of focusing on swiftness of curing, the neutralization degree is preferably 50 mol% or more, more preferably 80 mol% or more, and even more preferably 90 mol% or more.

Incidentally, the number of moles of the basic compound is regarded as the number of moles of a monovalent strong acid necessary for stoichiometrically and completely neutralizing the basic compound.

Furthermore, as the solid-state materials having a basic surface, solid-state materials having a structure, which is equal to that of the basic low-molecular compound, on the surface can be exemplified, and specific examples thereof include basic alumina, soda-lime glass, mortar, and concrete.

Temperature conditions when the resin composition of the present disclosure is crosslinked may be appropriately selected depending on a contact method with a base to be used, the type of base, the addition amount of a base, use application of the crosslinkable composition of the present invention, and the like, and from the viewpoint that energy used in crosslinking process can be suppressed, the temperature is preferably 120°C or lower, more preferably 100°C or lower, and further preferably 80°C or lower. Furthermore, it is preferable to perform crosslinking at an ambient environment temperature or higher, and specifically, the temperature is -20°C or higher, more preferably -10°C or higher, and further preferably 0°C or higher.

### <Use application of resin composition>

The resin composition of the present disclosure and the crosslinked product thereof can be suitably used in various use applications requiring crosslinking under moderate temperature conditions. Therefore, the crosslinkable resin composition of the present invention and the crosslinked product thereof can be widely used in various use applications and fields, such as an adhesive, a pressure-sensitive adhesive, an ink, a primer, a protection coating agent, a sealant, an architectural paint, and an automotive paint.

### Examples

Hereinafter, the present invention will be described in more detail by means of Examples; however, the present invention is not limited only to these Examples. Incidentally, unless otherwise specified, "part(s)" means "part(s) by mass" and "%" means "mass%".

### <Synthesis Example 1>

After performing transesterification reaction of pentanediol and diethyl methylene malonate according to Example 4 in WO 2018/031101, the reaction liquid was treated under high vacuum condition (1 torr) to distill diethyl methylene malonate to become less than 1%, and thereby polyfunctional methylene malonate (PD-PES) obtainable by transesterification of pentanediol and diethyl methylene malonate was obtained. The content of the methylene malonate group was measured by ¹H-NMR, and as a result, was 3.6 mmol/g.

### <Example 1>

A 40% propylene glycol monomethyl ether acetate solution of acrylic polycarboxylic acid (main resin) having copolymer composition as shown in Table 2, has a carboxy group (COOH) content of 1.78 mmol/g, and a weight average molecular weight of 8000, a 50% propylene glycol monomethyl ether acetate solution of PD-PES obtained in Synthesis Example 1, and a 10% propylene glycol monomethyl ether acetate solution of dimethylbenzylamine were prepared.

2.00 g of the main resin solution was weighed in a 10 ml screw-top tube, and 0.19 g of the dimethylbenzylamine solution was added thereto, and then, they were thoroughly stirred with a spatula. 0.80 g of the PD-PES solution was added thereto, and then, they were thoroughly stirred with a spatula and left to stand still at room temperature with a lid.

The content liquid was gradually thickened, and, after 55 minutes from addition of the solution of PD-PES, lost fluidity. This time was regarded as a gelation time. Incidentally, since fluidity is not lost unless the crosslinking density is increased to a certain degree or higher, the gelation time is regarded as an index for crosslinking efficiency.

Furthermore, when the appearance after elapse of 8 hours after addition of the solution of PD-PES was observed, the appearance was uniformly transparent. Incidentally, when bonding between an active hydrogen group and a methylene malonate group is not efficiently generated but bonding between methylene malonate groups is generated more, there is a tendency that the main resin, which is not sufficiently incorporated into crosslinking, aggregates and is separated to degrade transparency or uniformity, and thus appearance transparency or uniformity is regarded as an index for evaluating crosslinking efficiency.

Abbreviation of compounds and compound names are shown in Table 1, and results are shown in Table 2.

### <Comparative Example 1>

A crosslinkable resin composition was prepared under the same conditions as in Example 1 and left to stand still at room temperature, except that an acrylic resin, which has a hydroxyl group (OH) content of 1.67 mmol/g and a COOH content of 0.11 mmol/g (the total content of the active hydrogen group is the same amount as that of the resin used in Example 1), is similar to the resin used in Example 1 in terms of copolymer composition other than the active hydrogen group, and has a weight average molecular weight of 33000 as shown in compositions in Table 2, was used as the main resin.

The gelation time was 110 minutes, and the appearance after elapse of 8 hours became cloudy.

Abbreviation of compounds and compound names are shown in Table 1, and results are shown in Table 2.

### <Example 2>

A crosslinkable resin composition was prepared under the same conditions as in Example 1 and left to stand still at room temperature, except that a compound shown in Table 2 was used as a main resin.

The gelation time was 40 minutes, and the appearance after elapse of 8 hours became uniformly transparent.

Abbreviation of compounds and compound names are shown in Table 1, and results are shown in Table 2.

### <Example 3>

A crosslinkable resin composition was prepared under the same conditions as in Example 2 and left to stand still at room temperature, except that a 10% sodium hydroxide aqueous solution was used as a solution of a base and the amount of the solution of the base added was set to be 0.06 g.

The gelation time was 13 minutes, and the appearance after elapse of 8 hours became uniformly transparent.

Abbreviation of compounds and compound names are shown in Table 1, and results are shown in Table 2.

### <Example 4>

A crosslinkable resin composition was prepared under the same conditions as in Example 1 and left to stand still at room temperature, except that a compound shown in Table 2 was used as a main resin to adjust the resin concentration to 35%, the amount of the resin solution added was set to be 2.29 g, and the amount of the solution of PD-PES added was set to be 1.19 g.

The gelation time was 36 minutes, and the appearance after elapse of 8 hours became uniformly transparent.

### <Example 5>

A crosslinkable resin composition was prepared in the same manner as in Example 1 and left to stand still at room temperature, except that a compound shown in Table 2 was used as a main resin, the amount of the resin solution added was set to be 1.97 g, and the amount of the solution of PD-PES added was set to be 0.40 g.

The gelation time was 43 minutes, and the appearance after elapse of 8 hours became uniformly transparent.

Results are shown in Table 2.

Abbreviation of compounds and compound names are shown in Table 1, and results are shown in Table 2.

**[Table 1]**

| Abbreviation | Compound name |
|---|---|
| CHMA | Cyclohexyl methacrylate |
| MMA | Methyl methacrylate |
| MAA | Methacrylic acid |
| HEMA | 2-Hydroxyethyl methacrylate |
| DMBA | Dimethylbenzylamine |
| NaOH | Sodium hydroxide |

**[Table 2]**

| | | | Example 1 | Example 2 | Example 3 | Example 4 | Example 5 | Comparative Example 1 |
|---|---|---|---|---|---|---|---|---|
| Main resin | Copolymer composition [%] | CHMA | 50.0 | 25.0 | 25.0 | 25.0 | 25.0 | 50.0 |
| | | MMA | 34.6 | 59.6 | 59.6 | 53.0 | 67.5 | 27.3 |
| | | MAA | 15.4 | 15.4 | 15.4 | 23.0 | 7.5 | 1.0 |
| | | HEMA | - | - | - | - | - | 21.7 |
| | Active hydrogen group content [mmol/g] | COOH | 1.78 | 1.78 | 1.78 | 2.67 | 0.87 | 0.11 |
| | | OH | - | - | - | - | - | 1.67 |
| | | Total | 1.78 | 1.78 | 1.78 | 2.67 | 0.87 | 1.78 |
| | Weight average molecular weight | | 8000 | 8000 | 8000 | 13000 | 25800 | 33000 |
| PD-PES | Methylene malonate group content [mmol/g] | | 3.6 | 3.6 | 3.6 | 3.6 | 3.6 | 3.6 |

| Type of base to be added | | | DMBA | DMBA | NaOH | DMBA | DMBA | DMBA |
|---|---|---|---|---|---|---|---|---|
| Charging setting | Active hydrogen/methylene malonate group molar ratio | | 1/1 | 1/1 | 1/1 | 1/1 | 1/1 | 1/1 |
| | Base addition amount [% with respect to main resin] | | 2.4 | 2.4 | 0.7 | 2.4 | 2.4 | 2.4 |
| Solution composition [%] | Main resin | | 40 | 40 | 40 | 35 | 40 | 40 |
| | PD-PES | | 50 | 50 | 50 | 50 | 50 | 50 |
| | Base | | 10 | 10 | 10 | 10 | 10 | 10 |
| Amount [g] | Main resin solution PD-PES solution Base solution | | 2.00 | 2.00 | 2.00 | 2.29 | 1.97 | 2.00 |
| | | | 0.80 | 0.80 | 0.80 | 1.19 | 0.40 | 0.80 |
| | | | 0.19 | 0.19 | 0.06 | 0.19 | 0.19 | 0.19 |
| Main resin/P PD-PES mass ratio (excluding solvent) | | | 2/1 | 2/1 | 2/1 | 1.3/1 | 4/1 | 2/1 |
| Result | Gelation time [min] | | 55 | 40 | 13 | 36 | 43 | 110 |
| | Appearance after elapse of 8 hours | | Uniformly transparent | Uniformly transparent | Uniformly transparent | Uniformly transparent | Uniformly transparent | Cloudy |

Comparing Example 1 and Comparative Example 1, although the main resin used in Example 1 had a low molecular weight and was disadvantageous in terms of crosslinking efficiency, the main resin gelated in a shorter time than that in Comparative Example 1, and the appearance after elapse of 8 hours became also uniformly transparent. On the other hand, the main resin used in Comparative Example 1 was supposed to have a much higher molecular weight and satisfactory crosslinking efficiency as compared to the resin used in Example 1; however, longer gelation time than that in Example 1 was required and the appearance after elapse of 8 hours became cloudy. Therefore, it is found that the carboxy group has higher chain transfer efficiency than the hydroxyl group, and when the polycarboxylic acid is used as a main resin, crosslinking can be efficiently performed with polyvalent methylene malonate under moderate temperature conditions.

Based on the above description, it became clear that designed resin characteristics of the resin composition of the present disclosure are likely to reflect physical properties required for a crosslinked cured product and the resin composition of the present disclosure is capable of efficiently crosslinking even under moderate temperature conditions.

## Claims

1. A resin composition comprising: an acrylic resin having a carboxy group; and a polyfunctional vinyl compound,
wherein the acrylic resin contains 0.6 mmol/g or more of the carboxy group, and
wherein the polyfunctional vinyl compound contains two or more structural units represented by the following Formula (1) per molecule. 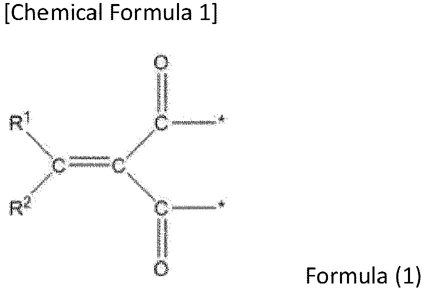
(^{∗} symbols in the formula each independently represent an atom that is bonded with the structural unit represented by Formula (1) and contained in another structural unit included in the polyfunctional vinyl compound but that is not contained in the structural unit represented by Formula (1). In Formula (1), R¹ and R² each independently are a hydrogen atom or a hydrocarbon group having 1 to 15 carbon atoms.)

2. A crosslinked product being obtainable by bringing an acrylic resin having a carboxy group, a polyfunctional vinyl compound, and a base into contact with one another,
wherein the acrylic resin contains 0.6 mmol/g or more of the carboxy group, and
wherein the polyfunctional vinyl compound contains two or more structural units represented by the following Formula (1) per molecule. 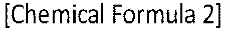 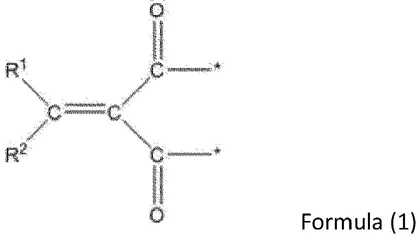
(^{∗} symbols in the formula each independently represent an atom that is bonded with the structural unit represented by Formula (1) and contained in another structural unit included in the polyfunctional vinyl compound but that is not contained in the structural unit represented by Formula (1). In Formula (1), R¹ and R² each independently are a hydrogen atom or a hydrocarbon group having 1 to 15 carbon atoms.)

3. A method for producing a crosslinked product, comprising a step of bringing an acrylic resin having a carboxy group, a polyfunctional vinyl compound, and a base into contact with one another,
wherein the acrylic resin contains 0.6 mmol/g or more of the carboxy group, and
wherein the polyfunctional vinyl compound contains two or more structural units represented by the following Formula (1) per molecule. 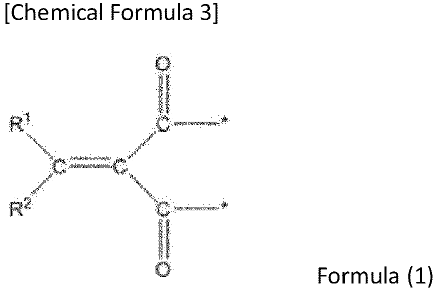
(^{∗} symbols in the formula each independently represent an atom that is bonded with the structural unit represented by Formula (1) and contained in another structural unit included in the polyfunctional vinyl compound but that is not contained in the structural unit represented by Formula (1). In Formula (1), R¹ and R² each independently are a hydrogen atom or a hydrocarbon group having 1 to 15 carbon atoms.)
